# EUROPÄISCHE PATENTSCHRIFT

(11) **EP 0 530 340 B1**
(45) Veröffentlichungstag und Bekanntmachung des Hinweises auf die Patenterteilung: **11.12.1996**
(21) Anmeldenummer: 92906621.5
(22) Anmeldetag: 19.03.1992
(51) Int. Cl.: B60T 8/42, B60T 8/48, B60T 8/50

(54) **BLOCKIERGESCHÜTZTE HYDRAULISCHE BREMSANLAGE**
HYDRAULIC-BRAKE SYSTEM PROTECTED AGAINST BLOCKING
SYSTEME DE FREINAGE HYDRAULIQUE A ANTI-BLOCAGE

(30) Priorität: 30.03.1991 DE 4110528
(43) Veröffentlichungstag der Anmeldung: 10.03.1993
(73) Patentinhaber: ITT Automotive Europe GmbH, 60488 Frankfurt (DE)
(72) Erfinder: ZAVISKA, Dalibor, D-6230 Frankfurt/Main 80 (DE); LINHOFF, Paul, D-6233 Kelkheim-Eppenhain (DE)
(86) Internationale Anmeldenummer: EP9200608
(87) Internationale Veröffentlichungsnummer: WO9217356

(56) Entgegenhaltungen:
- EP-A- 0 303 261
- WO-A-90/15738
- DE-A- 3 438 646
- DE-A- 3 505 410
- DE-A- 3 834 539
- DE-A- 3 929 464
- GB-A- 2 056 606
- PATENT ABSTRACTS OF JAPAN vol. 8, no. 94 (M-293)(1531) 28. April 1984 & JP-A-59 008 554 ( AKEBONO ) 17. Januar 1984
- PATENT ABSTRACTS OF JAPAN vol. 9, no. 149 (M-390)(1872) 25. Juni 1985 & JP-A-60 025 834 ( AKEBONO ) 8. Februar 1985
- PATENT ABSTRACTS OF JAPAN vol. 10, no. 365 (M-542)(2422) 6. Dezember 1986 & JP-A-61 160 343 ( TOYOTA ) 21. Juli 1986

## Beschreibung

Die Erfindung bezieht sich auf eine blockiergeschützte hydraulische Bremsanlage mit einem Hauptbremszylinder, an den über Bremsleitungen Radbremsen angeschlossen sind, einem Trennventil zum Sperren der Bremsleitung, einer Rücklaufleitung, die die Radbremse mit der Saugseite einer Pumpe verbindet, wobei in die Rücklaufleitung ein Auslaßventil eingefügt ist, einer Druckleitung, die die Druckseite der Pumpe mit der Bremsleitung zwischen dem Trennventil und der Radbremse verbindet.

Eine derartige Bremsanlage ist z. B. aus der US PS 4,636,009 bekannt.

Bei dem dort vorgestellten System kann der Druck in den Radbremsen erhöht, erniedrigt und gehalten werden. Dies wird dadurch realisiert, daß ein 3/3-Wegeventil vorgesehen ist, das die Bremsleitung und die Rücklaufleitung sperrt oder freigibt, je nachdem welche Druckvariation erzielt werden soll.

Ein solches Ventil ist kompliziert aufgebaut. Es wurde daher schon vorgeschlagen, lediglich ein elektromagnetisch betätigbares Auslaßventil vorzusehen, das die Rücklaufleitung sperrt oder freigibt, und in der Bremsleitung ein Drosselventil einzusetzen, so daß die Pumpe der Radbremse Druckmittel über eine Blende zuführt. In dieser Konfiguration kann der Druck in der Radbremse gesenkt oder erhöht werden, je nachdem, ob die über das Auslaßventil abfließende Druckmittelmenge pro Zeiteinheit größer ist als die über das Drosselventil zufließende Menge. In der bisher bekannten Ausführungsform wird das Drosselventil in die Bremsleitung eingefügt, so daß es auch während eines ungeregelten Bremsvorganges wirksam ist. Es wurde zwar schon vorgeschlagen, die Drossel schaltbar auszuführen, so daß sie nur während eines Regelvorganges in die Bremsleitung eingeführt wird. Eine solche Ausführung ist aber ebenfalls aufwendig, da entsprechende Schaltmittel vorgesehen werden müssen.

Aus der DE 35 05 410 A1 ist eine Bremsanlage bekannt, bei der durch Ein- und Auslaßventile der Druck in den Radbremsen gesteuert wird. Das Einlaßventil befindet sich in einer Verbindung zwischen der Radbremse und dem Hauptzylinder bzw. einer Druckmittelquelle. Das Auslaßventil befindet sich in einer Leitung, die die Radbremse mit einem Vorratsbehälter verbindet. Die Druckmittelquelle besteht aus einer Pumpe, die aus einem Vorratsbehälter ansaugt und über eine Druckleitung mit der Verbindungsleitung zwischen der Radbremse und dem Hauptbremszylinder verbunden ist. In der Druckleitung ist eine Drossel vorgesehen, die die Aufgabe hat, Druckmittelspitzen, die durch den zyklischen Betrieb der Pumpe entstehen, derart zu dämpfen, daß ein im etwa gleichbleibender Druckmittelstrom zur Verfügung gestellt wird.

Die Erfindung beruht auf der Aufgabe, die Ventilschaltung so auszuführen, daß die Drossel fest im System installiert werden kann, so daß zusätzliche Schaltmittel nicht notwendig sind.

Die Erfindung schlägt daher vor, eine Drossel in der Druckleitung der Pumpe vorzusehen, also außerhalb der Bremsleitung. Dessen Drosselwirkung ist derart auf die steuerbare Drosselwirkung des Anslaßventils abgestimmt, daß der Druch in der Radbremse sowohl gesenht als auch erhöht werden kann.

Eine weitere Aufgabe der Erfindung ist es Mittel vorzusehen, die es ermöglichen, zusätzliches Druckmittel in den Regelkreis unterhalb des Trennventils einzuführen. Diese Aufgabe wird dadurch gelöst, daß Hauptbremszylinder und Druckseite der Pumpe über ein Rückschlagventil miteinander verbunden sind, das zur Druckseite der Pumpe hin öffnet.

Das Drosselventil kann entweder aus einer fest eingestellten Blende oder aus einem Stromregelventil bestehen. Ein Stromregelventil hätte den Vorteil, daß durch Abstimmung der Pumpenförderleistung auf das Regelverhalten des Stromregelventils ein fester Druck am Ausgang der Pumpe eingestellt werden kann.

Das Trennventil kann sowohl elektromagnetisch als auch hydraulisch betätigt werden. Für die hydraulische Betätigung sind verschiedene Möglichkeiten gegeben, so kann das Trennventil vom Druck am Ausgang der Pumpe betätigt werden oder über einen Stößel, der am Kolben des Niederdruckspeichers befestigt bzw. angelegt ist.

Weiterhin kann es sinnvoll sein, zusätzlich zur Drossel ein elektromagnetisch betätigbares Einlaßventil vorzusehen. Dieses Ventil bräuchte, da zusätzlich eine Drossel vorgesehen ist, nur in bestimmten Ausnahmesituationen zu schalten. Dies wäre z. B. dann der Fall, wenn der Druck in der Radbremse sehr weit abgesenkt werden muß. In diesem Fall ist es notwendig, die Druckmittelzufuhr über die Drossel vollständig zu unterbinden.

Im folgenden soll anhand von 5 Ausführungsbeispielen, dargestellt in 5 Figuren, die Erfindung näher erläutert werden.

Dabei zeigen:
- Fig. 1: eine Bremsanlage mit elektromagnetisch betätigbaren Trennventilen
- Fig. 2 und 3: jeweils eine Bremsanlage mit hydraulisch betätigbaren Trennventilen
- Fig. 4: eine Bremsanlage mit Trennventilen, die mittels des Kolbens des Niederdruckspeichers betätigt werden. Zusätzlich ist hier eine ASR-Schaltung dargestellt,
- Fig. 5: eine weitere Variante.

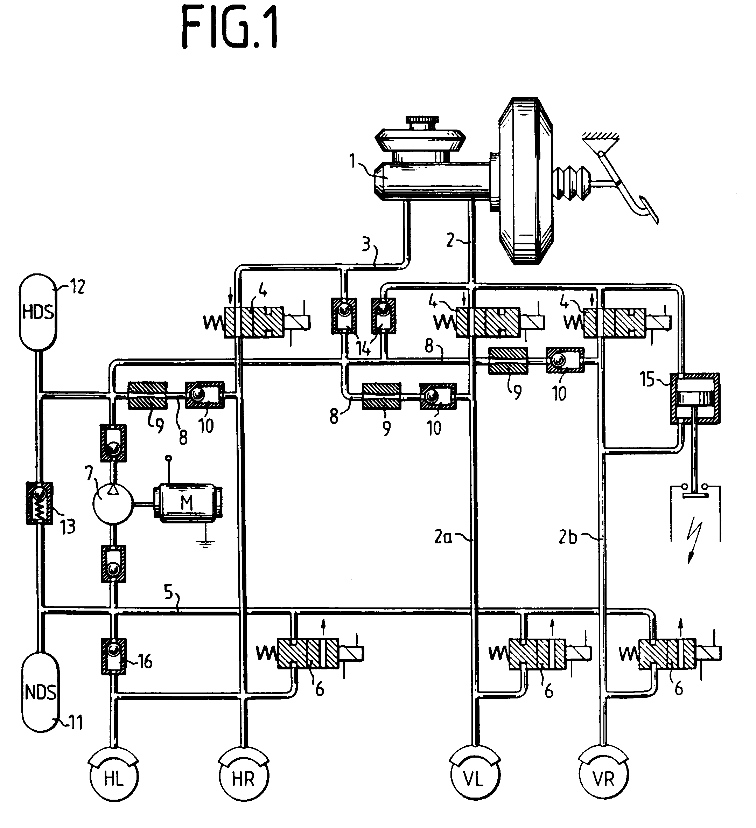

Gemäß der Fig. 1 besteht die Bremsanlage aus einem Hauptbremszylinder 1, an den über Bremsleitungen 2 und 3 die Radbremsen des Fahrzeuges angeschlossen sind. Bremsleitung 2 verzweigt in zwei Bremsleitungen 2a und 2b zu den Vorderrädern des Fahrzeuges links und rechts (VL und VR), Bremsleitung 3 führt zu den Radbremsen der Hinterräder links und rechts (HL und HR). In der Bremsleitung 3 und in den Zweigleitungen 2a und 2b ist je ein Trennventil 4 eingefügt, das elektromagnetisch betätigbar ist und in seiner Grundstellung die Bremsleitung offen hält. Wird der Betätigungsmagnet erregt, so schaltet das jeweilige Ventil in die Sperrstellung.

Die Radbremsen stehen einzeln (VL, VR) bzw. paarweise (HL, HR) über je eine Rücklaufleitung 5 mit der Saugseite der Pumpe 7 in Verbindung. In die Rücklaufleitung ist je ein Auslaßventil 6 eingefügt. Die Pumpe fördert über eine sich verzweigende Druckleitung 8 in die Bremsleitungen 2a, 2b, 3 unterhalb des Trennventils 4. In die Zweigleitung der Druckleitung 8 sind je ein Drosselelement 9 und ein Rückschlagventil 10 hintereinander geschaltet. Das Drosselelement 9 kann aus einer fest eingestellten Blende oder aber aus einem Stromregelventil bestehen. Das Rückschlagventil 10 öffnet zur Bremsleitung hin. An der Saugseite der Pumpe ist ein Niederdruckspeicher 11 vorgesehen, während an der Druckseite der Pumpe ein Hochdruckspeicher 12 angeordnet ist.

Mit einem Stromregelventil erhält man einen gleichmäßig starken Druckmittelstrom unabhängig vom Druckgefälle.

Der Einsatz einer Blende ist zwar konstruktiv einfacher, beinhaltet aber eine nicht immer gewünschte Abhängigkeit zwischen Druckgefälle und Druckmittelstrom.

Es hat sich herausgestellt, daß der Einsatz einer Blende für die Hinterradbremse ausreicht, während die Verwendung eines Stromreglers für die Vorderradbremse angezeigt ist.

Je nach Auslegung der Bremsanlage kann auch auf ein Hochdruckspeicher verzichtet werden. Dies gilt insbesondere dann, wenn die Förderleistung der Pumpe so auf das Drosselelement abgestimmt ist, daß ein ausreichender Druck am Ausgang der Pumpe eingestellt wird.

Zusätzlich kann zwischen der Druckseite der Pumpe und der Saugseite der Pumpe ein Überdruckventil 13 vorgesehen werden, das den Pumpendruck begrenzt. Dieses Ventil kann Bestandteil des Hochdruckspeichers sein, wodurch es automatisch geöffnet wird, wenn der Hochdruckspeicher ein bestimmtes Volumen erreicht. Weiterhin sind Rückschlagventile 14 vorgesehen, die die Arbeitskammern des Hauptbremszylinders mit der Druckseite der Pumpe verbinden. Die Rückschlagventile öffnen zur Pumpe hin. Weiterhin kann ein Druckschalter vorgesehen werden, der die Druckdifferenz zwischen der Radbremse und dem Hauptbremszylinder mißt. Sinkt der Druck im Hauptbremszylinder unter den Druck des Radbremszylinders, so öffnen ein oder mehrere Trennventile 4, so daß ein Druckausgleich stattfindet.

Die Darstellung sieht eine Pumpe mit Hochdruckspeicher und Niederdruckspeicher für die ganze Bremsanlage vor. Möglich ist aber auch, ein Hilfsdruckversorgungssystem für jeden Bremskreis vorzusehen. Beliebige Kreisaufteilungen können vorgesehen werden.

Das Rückschlagventil 16 soll verhindern, daß beim schnellen Loslassen und Wiederbetätigen des Bremspedals während einer Regelung mehr Volumen in das System eingepumpt wird, als es der Volumenaufnahme entspricht. Dies würde zu Restdrücken in der Schnüffellochstellung des Hauptbremszylinders führen. Bei einer Verwendung von Hauptbremszylindern, die die eventuell auftretenden Restdrücke verkraften, kann auf das Rückschlagventil 16 verzichtet werden.

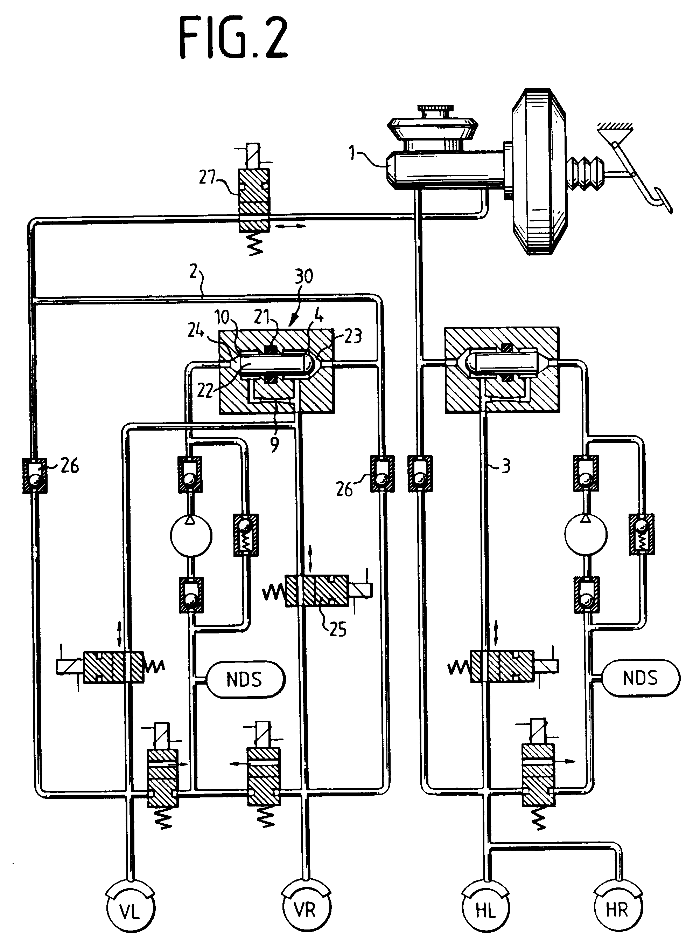

Die Bremsanlage gemäß Fig. 2 ist ähnlich der nach Fig. 1 aufgebaut. Ein wichtiger Unterschied ist, daß das Trennventil 4 hydraulisch betätigt wird. Das Ventil wird vom Pumpendruck betätigt. Das heißt, wenn mit Beginn einer Regelung die Pumpenförderung einsetzt, wird durch den sich aufbauenden Pumpendruck das Ventil umgeschaltet. Dies ist aber nur eine Möglichkeit der hydraulischen Betätigung. Weitere Betätigungsmöglichkeiten bestehen darin, daß z.B. der Druckabfall zwischen der Radbremse und dem Auslaßventil 6 mit Beginn einer Regelung genutzt wird. Denkbar wäre aber auch der Druckanstieg zwischen dem Auslaßventil 6 und der Pumpe 7. Neben einer hydraulischen Betätigung ist auch eine mechanische Betätigung denkbar, so kann das Ventil an den Speicherkolben des Hochdruckspeichers 12 gekoppelt werden. Denkbar wäre auch, die axiale Bewegung der Welle des Motors M, der die Pumpe 7 antreibt, zu nutzen.

Eine weitere Besonderheit der Figur 2 ist die Kpmbination mit dem Rückschlagventil 10 zu einem Kombinationsventil 30. Und zwar ist ein gemeinsamer Ventilkörper 22 vorgesehen, der auf seinen beiden Seiten je ein Schließelement trägt, das mit einem Ventilsitz 23 bzw. 24 zusammenwirkt. Der Ventilkörper 22 ist dichtend (Dichtung 21) geführt. Die jeweils stromabwärts liegenden Räume der Ventile sind über die Drossel 9 miteinander verbunden. Wenn im Hauptzylinder ein Druck aufgebaut wird, so ist die gemäß der Darstellung rechte Stirnseite des Kolbens 22 mit Druck belastet und drängt den Kolben gegen den Ventilsitz 24, so daß das Rückschlagventil 10 gesperrt ist. Wird, wie schon erläutert, ein Pumpendruck aufgebaut, so drängt der Pumpendruck gegen die gemäß der Darstellung linke Stirnseite des Kolbens 22 und bewegt den Kolben gegen den Dichtsitz 23, so daß das Trennventil 4 gesperrt ist und das Rückschlagventil öffnet. Nun kann Druckmittel über die Drossel 9 in die Bremsleitung gelangen.

Die jeweiligen Schließkörper brauchen nicht unbedingt einstückig mit den Kolben ausgebildet sein. Es können auch Kugeln vorgesehen werden, die an die gegenüberliegende Stirnseite des Kolbens anlegbar sind.

Die Schaltfunktion des Differenzdrucksensors 15 gemäß Figur 1 wird durch ein Rückschlagventil 26 übernommen, das die Radbremsen unmittelbar mit dem Hauptbremszylinder verbindet.

Die Schaltung gemäß Figur 2 sieht ein zusätzliches Einlaßventil 25 in der Bremsleitung zwischen dem Trennventil und der Radbremse vor. Ein derartiges Ventil könnte auch in den anderen Ausführungsformen eingesetzt werden und erfüllt dann die gleiche Funktion wie weiter unten beschrieben. Statt dem zusätzlichen Einlaßventil 25 kann auch ein zusätzliches Sperrventil 27 in der Hauptbremsleitung vorgesehen werden. Das Trennventil 4 kann auch als Rückschlagventil in der Bremsleitung dargestellt werden. Druckabbau erfolgt dann über Rückschlagventil 26.

Die Ausführung nach Fig. 2 sieht je Bremskreis eine Pumpe und ein Trennventil vor.

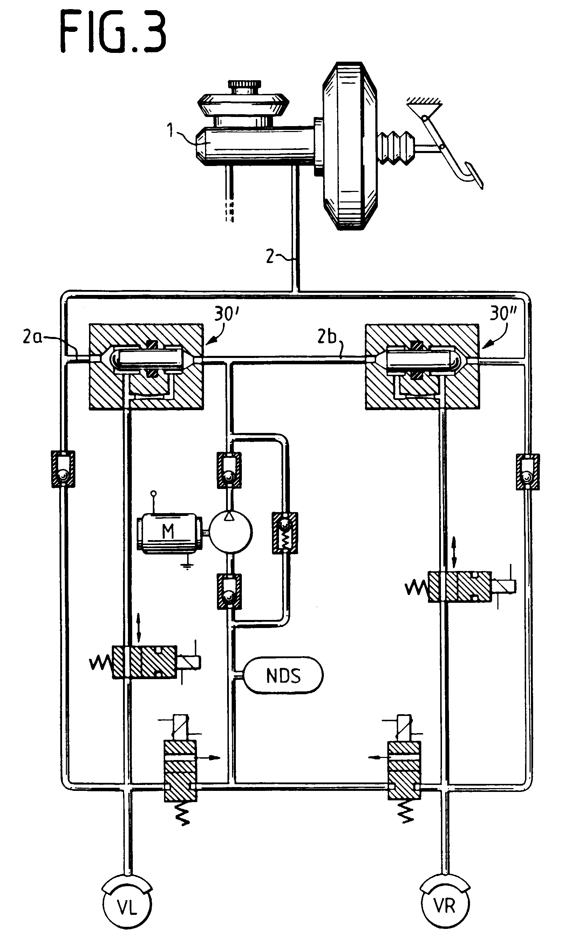

In Fig. 3 ist eine Abwandlung des Vorderradbremskreises dargestellt. Hier ist ein Trennventil 4 je Radbremse vorgesehen. Das bedeutet, daß die Bremsleitung in zwei Zweigleitungen 2a,2b aufgeteilt wird, die je ein Trennventil 4 bzw. Kombinationsventil 30', 30" besitzen.

Eine entsprechende Aufteilung wäre auch mit den Elementen gemäß der Fig. 1 möglich.

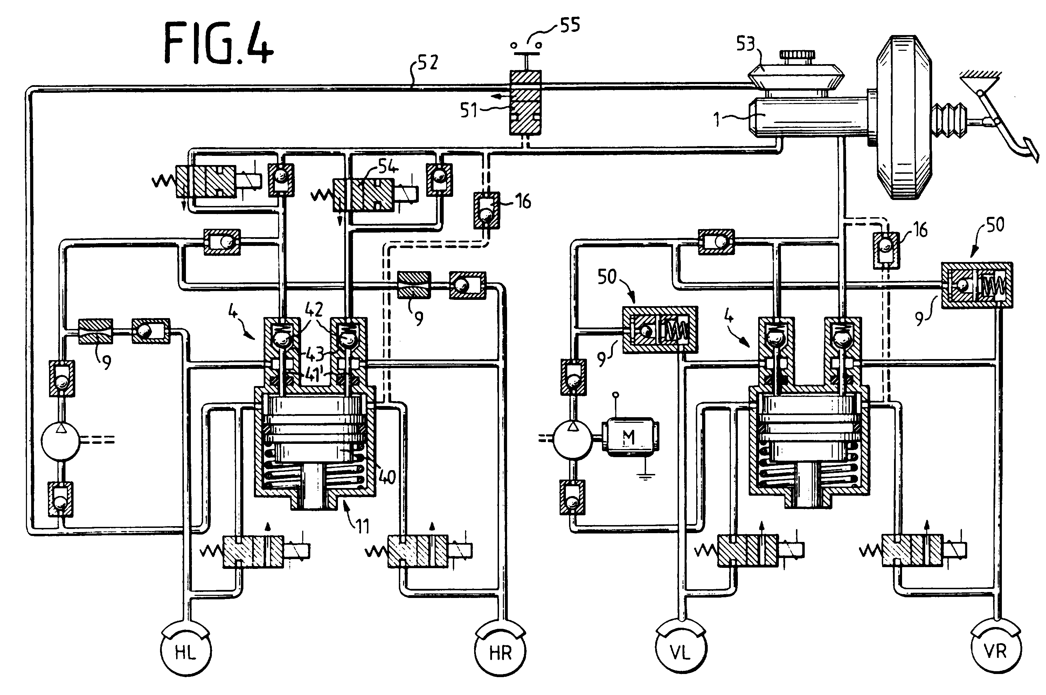

In Fig. 4 ist ebenfalls eine Zweikreisbremsanlage vorgesehen, die für jeden Bremskreis eine Pumpe aufweist. Beide Bremsleitungen verzweigen zu den Radbremsen, wobei in jeder Zweigleitung ein Trennventil 4 vorgesehen ist. Die Trennventile eines Bremskreises werden über Stößel 41',41" betätigt, die am Kolben 40 des Niederdruckspeichers 11 befestigt sind. Füllt sich der Niederdruckspeicher, so entfernen sich die Stößel 41',41" von den Ventilkörpern 42, so daß diese von einer Ventilfeder auf einen Ventilsitz 43 gedrückt werden, wodurch die Bremsleitung gesperrt wird. Jeder Radbremse ist ein Auslaßventil zugeordnet. In den Druckleitungen zwischen der Pumpe und den Bremsleitungen ist je ein Drosselelement 9 vorgesehen.

Desweiteren gelten die allgemeinen Ausführungen, die zu Figur 1 gemacht worden sind. Insbesondere sind beliebige Bremskreisaufteilungen denkbar, wobei insbesondere für die Radbremsen der Vorderachse Stromregelventile 50 bzw. für die Radbremsen der Hinterachse einfache Blenden vorgesehen werden können. Den Pumpen können Hochdruckspeicher zugeordnet werden und Überdruckventile, die ggf. vom Kolben des Hochdruckspeichers betätigt werden können. Die Rückschlagventile 16, die die gleiche Aufgabe haben wie in Figur 1 beschrieben, schließen unmittelbar an die Niederdruckspeicher 11 an.

Weiterhin zeigt das Bild eine mögliche Erweiterung der Anlage zu einem ASR-Betrieb (ASR = Antriebsschlupfregelung). Entsprechendes gilt für die Anlagen nach Figur 1 bis 3. Dazu werden in den Bremsleitungen zwischen den Trennventilen 4 und dem Hauptbremszylinder 1 Sperrventile 54 eingesetzt, die elektromagnetisch betätigbar sind. Diese Ventile werden als ASR-Ventile bezeichnet und sind nur in den Bremsleitungen notwendig, die zu den angetriebenen Rädern führen. Weiterhin ist eine Saugleitung 52 zwischen der Saugseite der Pumpe und einem Druckmittelvorratsbehälter 53 vorgesehen. In die Saugleitung 52 ist ein Sperrventil 51 eingefügt, das normalerweise offen ist. Es wird vom Hauptzylinderdruck betätigt, derart, daß die Saugleitung bei einer Bremsung gesperrt ist. Dann liegt ein geschlossenes System vor. Da eine Antriebsschlupfregelung nur dann erfolgt, wenn kein Hauptbremszylinderdruck existiert, kann die Pumpe in diesem Fall aus dem Vorratsbehälter 53 ansaugen und die Bremskreise füllen. Gemäß der Figur 4 schließt die Saugleitung 52 unmittelbar an den Vorratsbehälter 53 an. Dies ist aber nicht zwingend notwendig. Denkbar wäre auch, daß die Saugleitung 52 an eine der Hauptzylinderkammern anschließt. Da während einer ASR-Regelung das Bremspedal nicht betätigt ist, besteht eine Verbindung zwischen den Kammern des Hauptbremszylinders und dem Vorratsbehälter 53. Die Pumpe kann daher über den Hauptzylinder aus dem Vorratsbehälter 53 ansaugen.

Das Sperrventil 51 kann auch elektromagnetisch betätigt werden. Dazu ist ein Druckschalter vorzusehen, der registriert, ob der Hauptzylinder drucklos ist. Ist dies der Fall, und wird eine ASR-Regelung notwendig, so öffnet das Sperrventil 51 die Verbindung zum Vorratsbehälter direkt oder über den Hauptbremszylinder. In der Figur 4 ist weiterhin ein Schalter 55 symbolisch angedeutet, dieser wird betätigt, sobald in der Bremsleitung ein Druck aufgebaut wird. Der Schalter kann unmittelbar den Druck messen oder aber die Bewegung des Ventilkörpers des Sperrventils 51 registrieren. Mit diesem Schalter soll festgestellt werden können, ob während einer ASR-Regelung gebremst wird.

Eine weitere Möglichkeit, die nicht dargestellt ist, trifft insbesondere dann zu, wenn eine Diagonalaufteilung vorgesehen ist. Dann können die Ventile so geschaltet werden, daß die Pumpe über einen Druckmittelpfad ansaugt, der über die Radbremse des nichtangetriebenen Rades verläuft.

Die bisher beschriebenen Anlagen gemäß Fig. 1 bis 4 arbeiten nach dem folgenden Schema.

In der Grundstellung der Anlage sind die Trennventile geöffnet und die Auslaßventile gesperrt. Geöffnet sind auch die ASR-Ventile gemäß der Fig. 4. Durch Niedertreten des symbolisch angedeuteten Pedals wird Druckmittel über die Bremsleitungen 2 und 3 bzw. deren Zweigleitung in die Radbremsen verdrängt. Es wird ein Bremsdruck aufgebaut, der zu einer Fahrzeugverzögerung führt. Die Rückschlagventile 10 verhindern, daß ein Druck in der Druckleitung aufgebaut wird. Da das Drosselelement 9 nicht in der Bremsleitung angeordnet ist, kann es auch keine störende Wirkung auf den Druckaufbau während einer Bremsung entfalten.

Während einer Bremsung wird das Drehverhalten der Räder laufend mittels nicht dargestellter Sensoren überwacht. Die Sensorsignale werden durch eine ebenfalls nicht dargestellten Auswerteeinheit ausgewertet, so daß.sofort festgestellt werden kann, wenn eines der Räder zu blockieren droht. In diesem Augenblick schaltet die Anlage in den Antiblockiermodus. Dieser beinhaltet, daß die Pumpe eingeschaltet wird und die Auslaßventile geöffnet werden. Gleichzeitig geht ein Signal an die Betätigungsmagnete der Trennventile (gemäß Fig. 1), so daß diese sperren.

In der Druckleitung wird ein Druck aufgebaut, der dazu führt, daß das Trennventil gemäß Fig. 2 bzw. Fig. 3 gesperrt wird. Gleichzeitig wird dort die Druckleitung freigegeben. Das in den Niederdruckspeicher 11 abgelassene Druckmittel führt in der Ausführungsform der Fig. 4 dazu, daß die Stößel sich von den Ventilkörpern 42 lösen, so daß die Trennventile 4 schließen. In allen Ausführungsformen ist daher sichergestellt, daß im Antiblockiermodus die Bremsleitung gesperrt ist. Die Pumpe fördert nun über das Drosselventil 9 in die Bremsleitung unterhalb des Trennventils und von dort in die Radbremse. Die Auslaßventile werden nun getaktet angesteuert, das heißt, sie werden in kurzer Folge geöffnet und geschlossen. Je nachdem, wie das Verhältnis von Öffnungszeit zu Schließzeit ist, gelangt ein größerer oder kleinerer Druckmittelstrom durch die Auslaßventile 6 in den Niederdruckspeicher 11. Ist der Druckmittelstrom größer als der durch die Blende bzw. das Stromregelventil 9, so wird der Druck in der Radbremse gesenkt. Ist er kleiner, so findet eine Bremsdruckerhöhung statt. Durch sukzessives Erhöhen und Senken des Drucks in der Radbremse kann ein optimaler Schlupfwert eingestellt werden, der hohe Bremsverzögerungen garantiert und es dem Rad erlaubt, noch Seitenführungskräfte aufzubauen.

Die zusätzlichen Einlaßventile nach Fig. 2 und 3 haben zwei Aufgaben. Insbesondere dann wenn das Trennventil 4 nicht elektromagnetisch betätigt wird, kann eine gewisse Verzögerung beim Schließen dieses Ventils mit Beginn einer Bremsschlupfregelung auftreten. Damit der Hauptbremszylinder 1 deswegen nicht übermäßig geleert wird, kann mit Beginn einer Bremsschlupfregelung das zusätzliche Einlaßventil 25 kurzzeitig gesperrt werden, bis das hydraulisch bzw. mechanisch betätigte Trennventil schließt.

Eine weitere Aufgabe besteht darin sicherzustellen, daß ein vollständiger Druckaufbau in der Radbremse stattfinden kann. Da die Pumpe ständig über die Drossel 9 zur Radbremse fördert, kann es unter gewissen Umständen dazu kommen, daß der Druck in der Radbremse nicht vollständig abgebaut werden kann. Tritt eine solche Situation auf, so kann das zusätzliche Einlaßventil 25 geschlossen werden, so daß bei geöffnetem Auslaßventil ein vollständiger Druckabbau erfolgt.

Da diese beiden Situationen nicht so häufig auftreten, braucht das zusätzliche Einlaßventil nur selten angesteuert werden. Dies hat den Vorteil, daß die mit dem Arbeiten des Einlaßventils verbundene Geräuschentwicklung vermieden wird.

Die Anlage soll weiterhin sicherstellen, daß beim Lösen der Bremse ein sofortiger Druckabbau in der Radbremse erfolgt. Dies kann über die Rückschlagventile 26 geschehen, die die Radbremsen unmittelbar mit dem Hauptbremszylinder verbinden. Bei elektromagnetisch betätigbaren Trennventilen gemäß Fig. 1 kann auch ein Differenzdruckschalter vorgesehen werden, der den Differenzdruck zwischen Hauptbremszylinder und Radbremse erfaßt, wobei bei einer auftretenden Differenz das Trennventil solange geöffnet wird, bis ein entsprechender Druckausgleich stattgefunden hat.

Eine weitere wichtige Funktion erfüllen die Rückschlagventile 14 nach Fig. 1 und Fig. 4, die auch entsprechend nach den Ausführungsformen der Fig. 2 und 3 vorgesehen werden können. Insbesondere auf Fahrbahnoberflächen mit stark wechselndem Reibwert kann es vorkommen, daß die Bremsschlupfregelung auf Niedrigreibwert beginnt, so daß das in den Regelkreis eingeschlossene Druckmittel gerade ausreicht, einen Bremsdruck aufzubauen entsprechend dem niedrigen Reibwert. Gelangen die Räder nun auf höheren Reibwert, so kann ein höherer Bremsdruck eingesteuert werden ohne daß die Räder blockieren. Dies kann durchaus auch vom Fahrer gewollt sein, was sich in einer entsprechend kräftigen Pedalbetätigung äußert. Gelangt nun ein Rad von niedrigen auf hohen Reibwert, so wird die Pumpe das Druckmittel, das in dem Regelkreis unterhalb des Trennventils vorhanden ist, vollständig in die Radbremse fördern. Dadurch wird der Hochdruckspeicher geleert, und der Druck am Ausgang der Pumpe wird sinken. In dem Moment kann Druckmittel über die sich öffnenden Rückschlagventile 14 in den Regelkreis einströmen.

In Fig. 4 ist zusätzlich die Möglichkeit dargestellt, eine Antriebsschlupfregelung (ASR) zu realisieren. Falls eine solche Regelung notwendig ist, wird der Pumpenantrieb eingeschaltet, so daß die Pumpe über das offene Sperrventil Druckmittel aus dem Druckmittelvorratsbehälter 53 ansaugt. Gleichzeitig werden die ASR-Ventile geschlossen, so daß das Druckmittel nicht zurück in den Hauptbremszylinder gelangen kann. Mit dem nun im Bremskreis vorhandenen Druckmittel kann eine Druckregelung ähnlich einer Blockierschutzregelung durchgeführt werden, wodurch an der Radbremse ein Antriebsschlupf eingestellt wird, der es ermöglicht, maximale Antriebsmomente und Seitenführungskräfte zu übertragen.

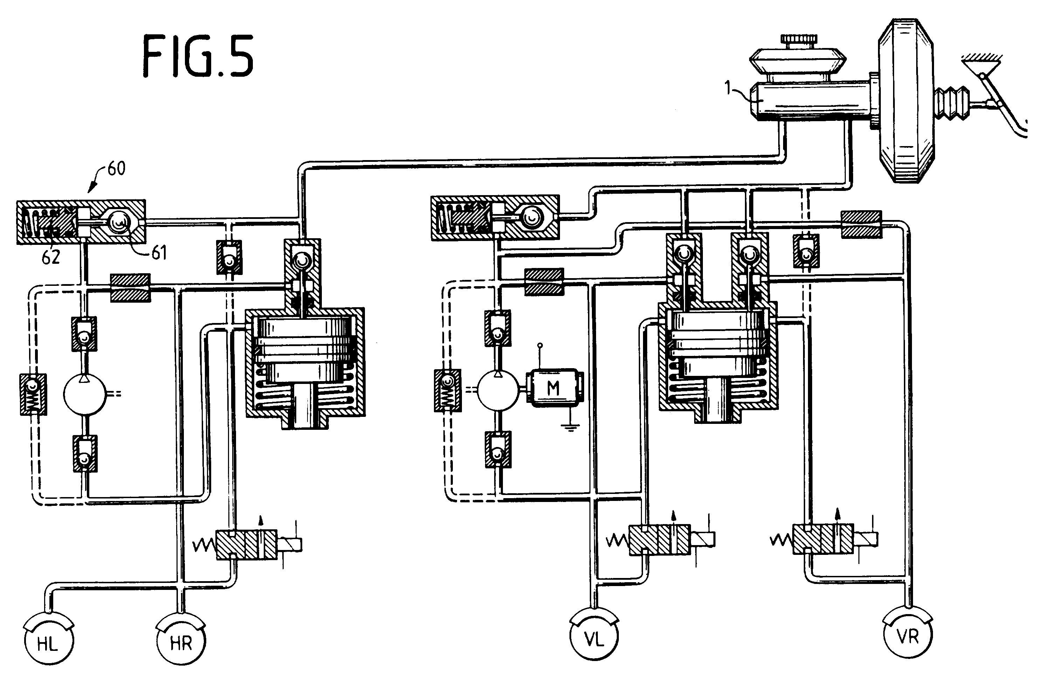

In Figur 5 ist eine weitere Variante der Figur 4 dargestellt. Das Prinzip läßt sich aber auf alle ähnlichen Anlagen übertragen. Ein Rückschlagventil 60 zwischen dem Hauptbremszylinder und der Druckseite der Pumpe ist entsperrbar dargestellt. Am Ventilkörper 61 des Rückschlagventils ist ein gegen eine Feder arbeitender Kolben 62 vorgesehen, der dem Pumpendruck bzw. bei geöffnetem Rückschlagventil dem Hauptzylinderdruck ausgesetzt ist. Solange dieser Umschaltdruck nicht erreicht wird, sperrt das Rückschlagventil zum Hauptbremszylinder hin. Ist der Pumpendruck kleiner als der Umschaltdruck, gibt der Kolben 62 den Ventilkörper 61 frei, so daß das Rückschlagventil vom Hauptzylinder zur Pumpe hin sperrt, so daß kein Druckmittel mehr vom Hauptbremszylinder in den Pumpenkreis gelangen kann.

### Bezugszeichenliste:

- 1.: Hauptbremszylinder
- 2.: Bremsleitung
- 3.: Bremsleitung
- 4.: Trennventil
- 5.: Rücklaufleitung
- 6.: Auslaßventil
- 7.: Pumpe
- 8.: Druckleitung
- 9.: Drosselelement
- 10.: Rückschlagventil
- 11.: Niederdruckspeicher
- 12.: Hochdruckspeicher
- 13.: Überdruckventil
- 14.: Rückschlagventil
- 15.: Differenzdruckschalter
- 16.: Rückschlagventil

- 21.: Dichtung
- 22.: Ventilkörper
- 23.: 1. Dichtsitz
- 24.: 2. Dichtsitz
- 25.: Einlaßventil
- 26.: Rückschlagventil
- 27: Sperrventil

- 30.: Kombinationsventil

- 40.: Kolben
- 41.: Stößel
- 42.: Ventilkörper
- 43.: Dichtsitz

- 50.: Stromregelventil
- 51.: Sperrventil
- 52.: Saugleitung
- 53.: Druckmittelvorratsbehälter
- 54.: ASR-Ventil
- 55.: Schalter

- 60.: Doppel-Rückschlagventil (entsperrbar)
- 61.: Ventilkragen
- 62.: Kolben

## Patentansprüche

1. Blockiergeschützte hydraulische Bremsanlage mit einem Hauptbremszylinder (1), an den über Bremsleitungen Radbremsen angeschlossen sind, mit einem Trennventil (4) zum Sperren der Bremsleitung (3), einer Rücklaufleitung (5), die die Radbremse mit der Saugseite einer Pumpe (7) verbindet, wobei in die Rücklaufleitung ein Auslaßventil eingefügt ist, einer Druckleitung (8), die die Druckseite der Pumpe mit der Bremsleitung zwischen dem Trennventil und der Radbremse verbindet, dadurch **gekennzeichnet,** daß in die Druckleitung (8) ein Drosselelement (9) eingefügt ist, dessen Drosselwirkung derart auf die steuerbare Drosselwirkung des Auslaßventils abgestimmt ist, daß der Druck in der Radbremse sowohl gesenkt als auch erhöht werden kann.

2. Bremsanlage nach Anspruch 1, dadurch **gekennzeichnet,** daß das Trennventil (4) elektromagnetisch betätigt ist.

3. Bremsanlage nach Anspruch 1, dadurch **gekennzeichnet,** daß das Trennventil (4) hydraulisch betätigt ist.

4. Bremsanlage nach einem der vorhergehenden Ansprüche, dadurch **gekennzeichnet,** daß der Hauptbremszylinder (1) mit der Druckseite der Pumpe (7) über ein Rückschlagventil (14) verbunden ist, das zum Hauptbremszylinder (1) hin sperrt.

5. Bremsanlage nach Anspruch 1, dadurch **gekennzeichnet,** daß an der Druckseite der Pumpe (7) ein Hochdruckspeicher (12) angeschlossen ist.

6. Bremsanlage nach Anspruch 1, dadurch **gekennzeichnet,** daß das Drosselelement (9) durch eine Blende konstanten Querschnittes oder ein Stromregelventil gebildet ist.

7. Bremsanlage nach Anspruch 1, dadurch **gekennzeichnet,** daß an der Saugseite der Pumpe (7) ein Niederdruckspeicher (11) angeschlossen ist.

8. Bremsanlage nach Anspruch 1, dadurch **gekennzeichnet,** daß parallel zu den Trennventilen (4) ein Differenzdruckschalter (15) geschaltet ist, der den Differenzdruck zwischen dem Hauptbremszylinder (1) und der Radbremse erfaßt.

9. Bremsanlage nach Anspruch 1, dadurch **gekennzeichnet,** daß in der Druckleitung (8) ein Rückschlagventil (10) vorgesehen ist, wobei das Trennventil (4) und das Rückschlagventil (10) einen gemeinsamen Ventilkörper (22) aufweisen.

10. Bremsanlage nach Anspruch 7, dadurch **gekenn zeichnet,** daß das Trennventil (4) von einem Betätigungsstößel (41) betätigt wird, der mit dem Kolben (40) des Niederdruckspeichers (11) verbunden ist.

11. Bremsanlage nach Anspruch 3, dadurch **gekennzeichnet,** daß zwischen Hauptbremszylinder (1) und Trennventil (4) elektromagnetisch betätigbare Sperrventile (54) vorgesehen sind.

12. Bremsanlage nach Anspruch 11, dadurch **gekennzeichnet,** daß die Saugseite der Pumpe (12) über eine Saugleitung (52) mit einem Vorratsbehälter (53) in Verbindung steht, wobei in die Saugleitung (52) ein Sperrventil (51) eingefügt ist, das die Saugleitung (52) sperrt, sobald am Hauptbremszylinder (1) ein Druck anliegt.

13. Bremsanlage nach einem der vorhergehenden Ansprüche, dadurch **gekennzeichnet,** daß in der Bremsleitung (2) zwischen dem Trennventil (4) und der Radbremse ein Einlaßventil (25) vorgesehen ist.

## Claims

1. An anti-locking hydraulic brake system including a master brake cylinder (1) connected, through brake conduits, to wheel brakes, further including a separating valve (4) for blocking the brake conduit (3), a return conduit (5) connecting the wheel brake to the intake side of a pump (7), with an outlet valve being provided in the return conduit, a pressure conduit (8) connecting the pressure side of the pump to the brake conduit between the separating valve and the wheel brake,
characterized in that a restriction element (9) is inserted in the pressure conduit (8) having its restricting effect conformed to the controllable restricting effect of the outlet valve so that the pressure in the wheel brake can be reduced and increased.

2. A brake system as claimed in claim 1,
characterized in that the separating valve (4) is electromagnetically actuated.

3. A brake system as claimed in claim 1,
characterized in that the separating valve (4) is hydraulically actuated.

4. A brake system as claimed in any one of the preceding claims,
characterized in that the master brake cylinder (1) is connected to the pressure side of the pump (7) through a check valve (14) blocking toward the master brake cylinder (1).

5. A brake cylinder as claimed in claim 1,
characterized in that a high pressure accumulator (12) is connected to the pressure side of the pump (7).

6. A brake system as claimed in claim 1,
characterized in that the restriction element (9) is formed by a diaphragm of constant cross-section or by a flow control valve.

7. A brake system as claimed in claim 1,
characterized in that a low pressure accumulator (11) is connected to the intake side of the pump (7).

8. A brake system as claimed in claim 1,
characterized in that a differential pressure switch (15) is connected in parallel to the separating valves (4) and determines the differential pressure between the master brake cylinder (1) and the wheel brake.

9. A brake system as claimed in claim 1,
characterized in that a check valve (10) is provided in the pressure conduit (8), with the separating valve (4) and the check valve (10) comprising a common valve body (22).

10. A brake system as claimed in claim 7,
characterized in that the separating valve (4) is actuated by an actuating plunger (41) which is connected to the piston (40) of the low pressure accumulator (11).

11. A brake system as claimed in claim 3,
characterized in that electromagnetically actuable closing valves (54) are provided between the master brake cylinder (1) and the separating valve (4).

12. A brake system as claimed in claim 11,
characterized in that the intake side of the pump (12), through an intake conduit (52), is in communication with a reservoir (53), with a closing valve (51) being provided in the intake conduit (52) for blocking the intake conduit (52) as soon as pressure develops in the master brake cylinder (1).

13. A brake system as claimed in any one of the preceding claims,
characterized in that an inlet valve (25) is provided in the brake conduit (2) between the separating valve (4) and the wheel brake.

## Revendications

1. Système de freinage hydraulique antiblocage des roues, comprenant un maître-cylindre de frein (1), auquel sont reliés, par l'intermédiaire de conduites de frein, des freins de roue, comprenant une soupape d'isolement (4) destinée à bloquer la conduite de frein (3), une conduite de retour (5), qui relie le frein de roue au côté aspiration d'une pompe (7), une soupape d'échappement étant insérée dans la conduite de retour, et une conduite de pression (8) reliant le côté refoulement de la pompe à la conduite de frein, entre la soupape d'isolement et le frein de roue,
caractérisé en ce qu'un élément d'étranglement (9) est inséré dans la conduite de pression (8), dont l'effet d'étranglement est ajusté par rapport à l'effet d'étranglement réglable de la soupape d'échappement de manière telle que la pression régnant dans le frein de roue puisse aussi bien être abaissée qu'augmentée.

2. Système de freinage selon la revendication 1, caractérisé en ce que la soupape d'isolement (4) est à commande électromagnétique.

3. Système de freinage selon la revendication 1, caractérisé en ce que la soupape d'isolement (4) est à commande hydraulique.

4. Système de freinage selon l'une des revendications précédentes, caractérisé en ce que le maître-cylindre de frein (1) est raccordé au côté refoulement de la pompe (7) par l'intermédiaire d'un clapet de non-retour (14), qui bloque l'écoulement en direction le maître-cylindre (1).

5. Système de freinage selon la revendication 1, caractérisé en ce qu'un accumulateur haute pression (12) est raccordé au côté refoulement de la pompe (7).

6. Système de freinage selon la revendication 1, caractérisé en ce que l'élément d'étranglement (9) est constitué par un diaphragme à section constante ou par une soupape régulatrice de débit.

7. Système de freinage selon la revendication 1, caractérisé en ce qu'un accumulateur basse pression (11) est relié au côté aspiration de la pompe (7).

8. Système de freinage selon la revendication 1, caractérisé en ce qu'un contacteur de pression différentielle (15) est raccordé en parallèle aux soupapes d'isolement (4), détectant la pression différentielle existant entre le maître-cylindre de frein (1) et le frein de roue.

9. Système de freinage selon la revendication 1, caractérisé en ce qu'un clapet de non-retour (10) est prévu dans la conduite de pression (8), la soupape d'isolement (4) et le clapet de non-retour (10) ayant un corps de soupape commun (22).

10. Système de freinage selon la revendication 7, caractérisé en ce que la soupape d'isolement (4) est actionnée par un poussoir de commande (41) relié au piston (40) de l'accumulateur basse pression (11).

11. Système de freinage selon la revendication 3, caractérisé en ce que des soupapes d'arrêt (54) à commande électromagnétique sont prévues entre le maître-cylindre de frein (1) et la soupape d'isolement (4).

12. Système de freinage selon la revendication 11, caractérisé en ce que le côté aspiration de la pompe (12) est relié, par l'intermédiaire d'une conduite d'aspiration (52), à un réservoir (53), une soupape d'arrêt (51) étant insérée dans la conduite d'aspiration (52), qui coupe la conduite d'aspiration dès qu'une pression existe au niveau du maître-cylindre de frein (1).

13. Système de freinage selon l'une des revendications précédentes, caractérisé en ce qu'une soupape d'admission (25) est disposée dans la conduite de frein (2), entre la soupape d'isolement (4) et le frein de roue.
